# EUROPÄISCHE PATENTSCHRIFT

(11) **EP 0 873 836 B1**
(45) Veröffentlichungstag und Bekanntmachung des Hinweises auf die Patenterteilung: **14.03.2001**
(21) Anmeldenummer: 98106763.0
(22) Anmeldetag: 14.04.1998
(51) Int. Cl.: B29B 7/76, B01F 15/00

(54) **Vorrichtung zur Entfernung von Kunststoffrückständen von Mischkopf-Auslaufrohren**
Device for removing synthetic material residues from mixhead outlets
Dispositif pour nettoyer d'orifices de décharge des mélangeurs

(30) Priorität: 23.04.1997 DE 19716982
(43) Veröffentlichungstag der Anmeldung: 28.10.1998
(73) Patentinhaber: Hennecke GmbH, 51379 Leverkusen (DE)
(72) Erfinder: Althausen, Ferdinand, 53819 Neunkirchen (DE)
(74) Vertreter: Drope, Rüdiger, Dr.

(56) Entgegenhaltungen:
- EP-A- 0 101 988
- DE-A- 3 626 990
- DE-A- 3 907 015
- DE-A- 4 340 559
- DE-A- 4 411 901
- DE-U- 8 616 880

## Beschreibung

Die vorliegende Erfindung betrifft eine Vorrichtung zur Entfernung von Kunststoffrückstand, insbesondere Polyurethanrückstand, vom Reinigungskolben und Auslaufrohr eines Mischkopfes, insbesondere eines Gegenstrominjektionsmischkopfes zur Herstellung von Polyurethan-Reaktivmischungen.

Das der vorliegenden Erfindung zugrundeliegende Problem wird bereits in der EP-A-0 101 988 behandelt. Danach wird vorgeschlagen, das Auslaufrohr und den Reinigungskolben nach jeder Befüllung einer Form (Schuß) zu erhitzen, so daß der Kunststoffrückstand, der nach Befüllung der Form am Auslaufrohr und Reinigungskolben haften geblieben ist, verdampft. Die in der EP-A-0 101 988 vorgeschlagene Lösung ist jedoch bei schnellem Arbeitszyklus, d.h. bei hoher Schußfolge, wegen der Trägheit der Erhitzung nicht oder nur mit großem Aufwand anwendbar. Zum Beispiel werden bei den heute weitgehend automatisierten Formfüllvorgängen Kunststoff-Formen mit Taktzeiten von 10 bis 30 Sekunden gefüllt. Ferner entsteht das Problem, die bei der Verdampfung der Kunststoffrückstände entstehenden Gase sicher aufzufangen und zu entsorgen.

Eine Vorrichtung gemäß dem Oberbegriff des Anspruchs 1 ist bekannt aus dem DE-A-43 40 559 wonach vorgeschlagen wurde, seitlich am Auslaufrohr anhaftende Rückstände zunächst mittels eines Abstreifringes in die Auslaufebene des Auslaufrohres zu schieben und anschließend mittels eines über Walzen laufenden Reinigungsbandes vom Auslaufrohr und Reinigungskolben abzunehmen. Die Entfernung von Rückständen nach diesem Vorschlag ist dann problematisch, wenn es vor der Entfernung des Rückstands bereits zu einer wesentlichen Aushärtung der Polyurethanreaktivmischung kommt.

Gegenstand der vorliegenden Erfindung ist, daß die Vorrichtung gemäß dem kennzeichnenden Teil des Anspruchs 1 einen Abstreifstößel, einen Mörser zur Aufnahme des Abstreifstößels mit einer im Winkel zu der Stoßfläche des Mörsers angeordneten Auslaßöffhung für den Kunststoffrückstand, Mittel zur Verbringung von Mischkopf und Abstreifstößel in Reinigungsstellung zueinander, in der die Abstreifkante des Abstreifstößels mit der Stirnfläche des Reinigungskolbens fluchtet, wobei die Achse des Reinigungskolbens zwischen Mörser und Abstreifstößel liegt, und Mittel zur Bewegung des Abstreifstößels parallel zur Stirnfläche des Reinigungskolbens in den Mörser und gegen die Stoßfläche des Mörsers aufweist.

Mit dem Abstreifstößel können auch fest anhaftende und gegebenenfalls bereits ausgehärtete Kunststoffrückstände sicher von der Stirnfläche des Reinigungskolbens und des Mischkopfauslaufrohres entfernt werden. Die Kunststoffrückstände werden anschließend mit dem Abstreifstößel in einen der Querschnittsform des Stößels angepaßten Mörser gefördert und dort gegen die Stoßfläche des Mörsers gestampft und dabei zermahlen. Die zermahlenen Kunststoffrückstände fallen durch eine im Mörser vorgesehene, mit dessen Stoßfläche fluchtende Auslaßöffnung in einen Auffang- und Sammelbehälter. Sie können anschließend recycled werden. Vorzugsweise wird der Abstreifstößel mittels einer Hydraulik bewegt und in den Mörser hineingestoßen, wobei die Hydraulikflüssigkeit einen Druck von 150 bis 180 bar aufweisen kann. Durch entsprechende Querschnittsgestaltung von Abstreifstößel und Hydraulikkolben kann auf die Stoßfläche des Mörsers eine Flächenkraft von 10 bis 500 N/mm² ausgeübt werden, die für die Zermahlung auch ausgehärteter Polyurethanrückstände, selbst wenn diese Füllstoffe enthalten, ausreichen. Bevorzugt liegt die Flächenkraft zwischen 30 und 100 N/mm².

Zur Entfernung seitlich am Auslaufrohr anhaftender Rückstände kann zusätzlich ein Abstreifring vorgesehen sein, der die seitlich anhaftenden Rückstände vor der Abstreifung mittels Abstreifstößel in die Ebene der Auslauföffnung fördert. Der Abstreifring kann, wie in DE-A 43 40 559, Fig. 6 dargestellt, mit dem Mischkopf verbunden sein, oder mit der Reinigungsvorrichtung verbunden sein, wobei im letzteren Fall der Abstreifring teilbar ausgebildet ist und nach Verfahren des Mischkopfes in die Reinigungsstellung geschlossen wird, so daß er das Auslaufrohr umschließt.

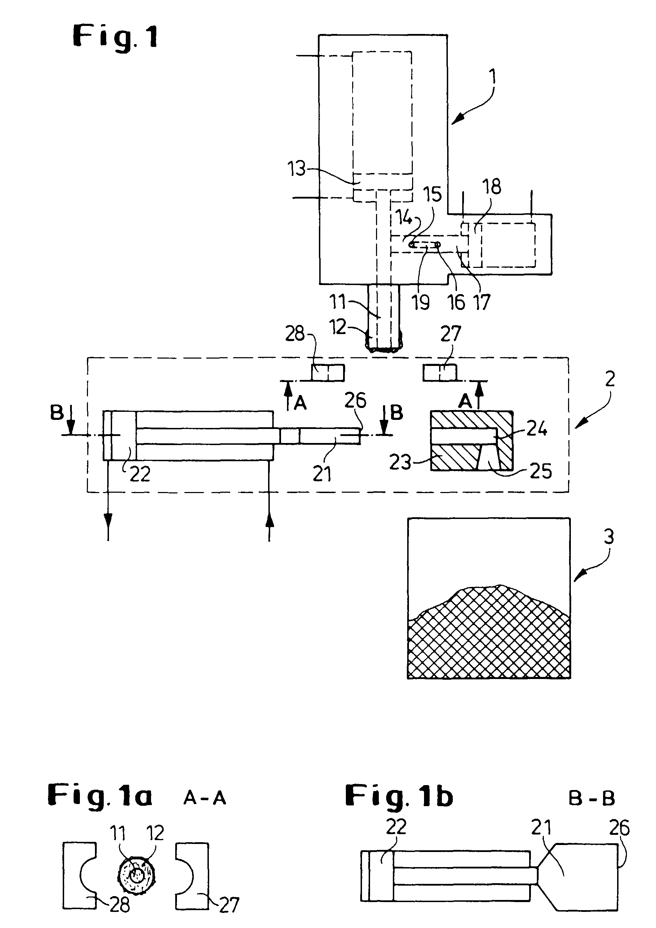

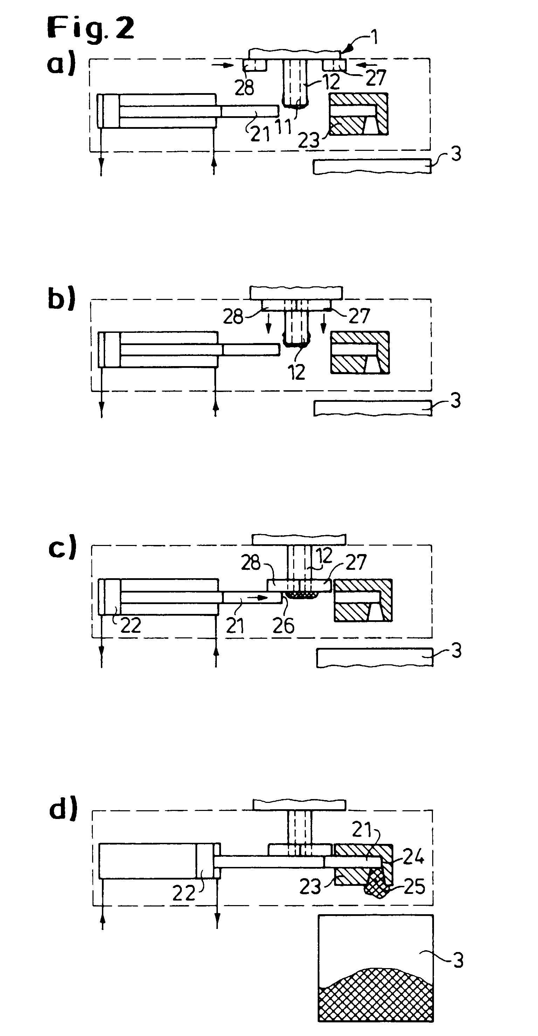

Die Erfindung wird nachfolgend anhand der Figuren 1 bis 3 näher erläutert.

Fig. 1 zeigt die erfindungsgemäße Vorrichtung in einer Ausbildung für einen Mischkopf 1 mit Auslaufrohr 12 und Reinigungskolben 11 mit im wesentlichem kreisrundem Querschnitt. Der Reinigungskolben 11 ist nach Schußende mittels Hydraulikkolben 13 in eine Position gebracht, in der dieser das Auslaufrohr 12 verschließt. Der an sich bekannte Mischkopf weist ferner eine Mischkammer 14 auf, in die gegenüberliegende Injektionsdüsen 15 für die Hauptkomponenten Polyol und Isocyanat der Polyurethanreaktivmischung münden. In der dargestellten Betriebsstellung nach Schußende ist die Mischkammer 14 durch den Verschlußkolben 17 mittels Hydraulikkolben 18 verschlossen, so daß die Reaktivkomponenten über Nuten 19 mit Rückführleitungen 16 verbunden sind. Die Reinigungsvorrichtung 2 besteht aus einem Abstreifstößel 21, der mittels Hydraulikkolben 22 senkrecht zur Achse des Reinigungskolbens 11 bewegt werden kann, sowie dem Mörser 23, der eine Stoßfläche 24 und eine Auslaßöffhung 25 aufweist. Unterhalb der Auslaßöffhung 25 kann ein Auffangbehälter 3 für die im Mörser 23 zermahlenen Rückstände vorgesehen sein.

Fig. 1b zeigt eine Ansicht B-B des Abstreifstößels. Mörser 23 und die Führung für den Abstreifstößel 21 sind in einem gemeinsamen nicht dargestellten Rahmen gehalten. Ferner können zur Entfernung seitlich am Auslaufrohr 12 anhaftende Rückstände zwei Halbringe 27 und 28 vorgesehen sein, die über eine geeignete, nicht dargestellte Mechanik geschlossen werden können, so daß sie das Auslaufrohr umfassen.

Fig. 1a zeigt eine Ansicht A-A der Abstreifringe.

Fig. 2 zeigt verschiedene Phasen des Reinigungsvorgangs.

Bei ortsfester Reinigungsvorrichtung wird zunächst der Mischkopf 1 nach dem Schuß in eine Position gebracht, in der das Auslaufrohr 12 zwischen den Abstreifhalbringen 27 und 28 liegt (Phase a). Anschließend werden die Abstreifhalbringe 27 und 28 geschlossen, so daß sie das Auslaufrohr 12 umschließen (Phase b). Danach werden die seitlich anhaftenden Rückstände durch axiale Verschiebung des Abstreifrings 27, 28 in die Ebene der Auslauföffnung gefördert (Phase c). Anschließend wird durch Betätigung des Hydraulikkolbens 22 der Abstreifstößel 21 mit der Abstreifkante 26 an der Unterseite von Reinigungskolben, Auslaufrohr und Abstreifring entlanggeführt, wobei die Rückstände mitgenommen und in den Mörser 23 gefördert sowie an der Stoßkante 24 zerkleinert und durch die Öffnung 25 ausgetrieben werden.

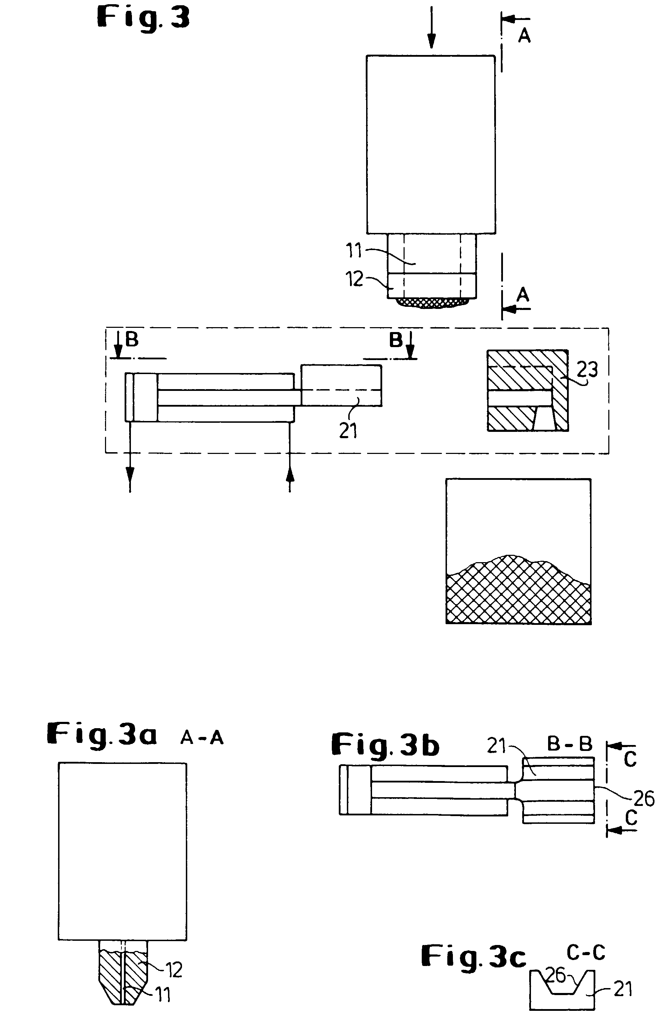

Fig. 3 zeigt die erfindungsgemäße Reinigungsvorrichtung für ein schlitzförmiges Auslaufrohr 12 mit entsprechend geformtem Reinigungskolben 11. Der Reinigungsstößel 21 ist der Kontur des Auslaufrohres 12 (Fig. 3a) angepaßt. Entsprechend ist die Öffnung des Mörsers 23 geformt.

Fig. 3c stellt die Ansicht C-C aus Fig. 3b dar, d.h. die Stirnfläche des Reinigungsstößels 21. Im übrigen bezeichnen gleiche Ziffern vergleichbare Elemente in den unterschiedlichen Figuren.

## Patentansprüche

1. Vorrichtung zur Entfernung von Kunststoffrückstand, insbesondere Polyurethanrückstand, von dem Reinigungskolben (11) und Mischkopfauslaufrohr (12) insbesondere eines Gegenstrominjektionsmischkopfes (1), dadurch gekennzeichnet, daß die Vorrichtung einen Abstreifstößel (21), einen Mörser (23) zur Aufnahme des Abstreifstößels (21) mit einer im Winkel zu der Stoßfläche (24) des Mörsers (23) angeordneten Auslaßöffnung (25) für den Kunststoffrückstand, Mittel zur Verbringung von Mischkopf und Abstreifstößel in Reinigungsstellung zueinander, in der die Abstreifkante (26) des Abstreifstößels (21) mit der Stirnfläche des Reinigungskolbens (11) fluchtet, wobei die Achse des Reinigungskolbens (11) zwischen Mörser (23) und Abstreifstößel (21) liegt, und Mittel (22) zur Bewegung des Abstreifstößels parallel zur Stirnfläche des Reinigungskolbens (11) in den Mörser (23) und gegen die Stoßfläche (24) des Mörsers aufweist.

2. Vorrichtung nach Anspruch 1, wobei die Stirnfläche des Reinigungskolbens (11) in Reinigungsstellung mit dem Auslaß des Auslaufrohres (12) fluchtet.

3. Vorrichtung nach Anspruch 2, wobei zusätzlich ein teilbarer Abstreifring (27, 28) für die Umfangsfläche des Auslaufrohres (12) vorgesehen ist, der in Reinigungsstellung schließbar und in Achsenrichtung des Rohres in eine Position verfahrbar ist, in der er mit der Abstreifkante (26) des Abstreifstößels (21) fluchtet.

4. Vorrichtung nach einem der Ansprüche 1 bis 3, wobei der Abstreifstößel (21) eine Kraft von 10 bis 500 N/mm² auf die Stoßfläche (24) des Mörsers (23) ausübt.

5. Vorrichtung nach einem der Ansprüche 1 bis 4, wobei unterhalb der Auslaßöffnung (25) des Mörsers (23) ein Auffangbehälter (3) für die Kunststoffrückstände angeordnet ist.

## Claims

1. Device for removing plastic residue, in particular polyurethane residue, from the cleaning piston (11) and mixing-head discharge tube (12) of, in particular, a countercurrent-injection mixing head (1),
characterised in that the said device has a stripping ram (21); a mortar (23) for receiving the stripping ram (21), the said mortar having an outlet aperture (25) for the plastic residue, which outlet aperture is disposed at an angle to the impact face (24) of the said mortar (23); means for bringing the mixing head and stripping ram towards one another into a cleaning position in which the stripping edge (26) of the stripping ram (21) is in alignment with the end face of the cleaning piston (11), the axis of the said cleaning piston (11) being located between the mortar (23) and the stripping ram (21); and means (22) for moving the stripping ram, parallel to the end face of the cleaning piston (11), into the mortar (23) and against the impact face (24) of the latter.

2. Device according to claim 1, wherein the end face of the cleaning piston (11) is in alignment, when in the cleaning position, with the outlet of the discharge tube (12).

3. Device according to claim 2, wherein a divisible stripping ring (27, 28) for the peripheral face of the discharge tube (12) is additionally provided, which stripping ring can be closed when in the cleaning position and is capable of travelling, in the axial direction of the tube, into a position in which it is in alignment with the stripping edge (26) of the stripping ram (21).

4. Device according to one of claims 1 to 3, wherein the stripping ram (21) exerts a force of 10 to 500 N/mm² on the impact face (24) of the mortar (23).

5. Device according to one of claims 1 to 4, wherein a collecting container (3) for the plastic residues is disposed underneath the outlet aperture (25) of the mortar (23).

## Revendications

1. Dispositif de protection sur des presses à imprimer comprenant un écran (10) de protection de forme plane qui est monté basculant par rapport à un axe (11) de basculement dans un bâti (G) de la presse et qui protège de l'accès par le personnel de service, une paire de cylindres comprenant un cylindre (1) porte-blanchet et un cylindre (2) porte-plaque, et après basculement, en s'éloignant de la paire (1, 2) de cylindre dégage l'accès à cette paire (1, 2) de cylindres
caractérisé en ce que
a) il est prévu pour chaque paire (1, 2 ; 3, 4) de cylindres d'une tour d'impression ayant des éléments de pont en "U" et en "N" superposés en alternance respectivement un propre écran (10 ; 20) de protection et
b) les axes (11 ; 21) de basculement des écrans (10 ; 20) de protection sont disposés dans la région de la tour d'impression délimitée par le pourtour extérieur des cylindres (2, 4) porte-plaque et à proximité de la ligne médiane imaginaire passant entre deux éléments de pont superposés de la tour d'impression.

2. Dispositif de protection suivant la revendication 1, caractérisé en ce qu'il est monté entre les paires de cylindres comprenant chacune un cylindre (1, 3) porte-blanchet et un cylindre (2, 4) porte-plaque de deux éléments de pont superposés dans la tour d'impression, un dispositif (30 ; 45) faisant écran.

3. Dispositif de protection suivant la revendication 2, caractérisé en ce que le dispositif formant écran est formé par une surface(30) de séparation interposée de manière amovible entre deux cylindres porte-blanchet superposés.

4. Dispositif de protection suivant la revendication 2, caractérisé en ce que le dispositif formant écran est formé par un dispositif (45) de lavage.

5. Dispositif de protection suivant l'une des revendications précédentes, caractérisé en ce que les écrans (10, 20) de protection sont fixés sur des manivelles (13) de manière excentrée par rapport au palier de rotation des manivelles (13) et en faisant un angle avec la ligne imaginaire passant par les paliers de rotation des manivelles (13) et les axes (11, 21) de basculement.
